# EUROPÄISCHE PATENTANMELDUNG

(11) **EP 1 835 590 A2**
(43) Veröffentlichungstag der Anmeldung: **19.09.2007**
(21) Anmeldenummer: 07004430.0
(22) Anmeldetag: 05.03.2007
(51) Int. Cl.: H02G 3/20, H02G 3/30

(54) **Multifunktionaler Kanal**

(30) Priorität: 07.03.2006 DE 202006003729 U
(71) Anmelder: TRILUX GmbH & Co. KG, 59759 Arnsberg (DE)
(72) Erfinder: Lenze, Fritz Peter, 2380 Perchtoldsdorf (AT); Raffenberg, Peter, 59755 Arnsberg (DE)
(74) Vertreter: Bobzien, Hans Christoph

(57) **Zusammenfassung**

Die Erfindung betrifft einen Kanal für abgehängte Decken zur Aufnahme von Versorgungsleitungen 18, 20 und Leuchten mit zwei sich gegenüber in einer Längsrichtung erstreckenden und einen Zwischenraum zwischen sich einschließenden Längsprofilen 2, 4, mehrere beabstandet zueinander angeordnete Verbindungsbrücken zur Verbindung der Längsprofile, 2, 4, welche sich quer oberhalb der Längsprofile 2, 4 erstrecken und bauseitig befestigbar sind, und zwischen den Längsprofilen 2, 4 und den Verbindungsbrücken wirkende Verbindungsmitteln. Zur Vermeidung, dass auf die Längsprofile wirkende Querkräfte das Distanzmaß des Zwischenraums verändern und somit den Einbau von Leuchten und Aggregaten erschweren, wird erfindungsgemäß vorgeschlagen, dass die Verbindungsbrücke als die Längsprofile 2,4 in Einbaulage umgreifende oder hintergreifende Spange 6 ausgebildet ist, die einen Horizontalschenkel 34 mit endseitig sich quer zu diesem erstreckenden Vertikalschenkeln 36, 38 aufweist, und dass die Verbindungsmittel zur auslenkungsfreien Fixierung der Seitenleisten ausgebildet sind.

## Beschreibung

Die Erfindung betrifft einen Kanal für abgehängte Decken zur Aufnahme von Versorgungsleitungen und Leuchten mit zwei sich gegenüber in einer Längsrichtung erstreckenden und einen Zwischenraum zwischen sich einschließenden Längsprofilen, mehreren beabstandet zueinander angeordneten Verbindungsbrücken zur Verbindung der Längsprofile, welche sich quer oberhalb der Längsprofile erstrecken und bauseitig oder werkseitig befestigbar sind, und zwischen den Längsprofilen und den Verbindungsbrücken wirkenden Verbindungsmitteln.

Ein derartiger Kanal ist beispielsweise aus der WO 93/00307 bekannt. Der hier offenbarte Kanal besteht aus zwei sich gegenüber in Längsrichtung erstreckenden und einen Zwischenraum zwischen sich einschließenden Längsprofilen, die über mehrere beabstandet zueinander angeordnete Verbindungsbrücken miteinander verbunden sind. Die Verbindungsbrücken sind an ihrem oberen Ende an der Decke oder an einem unterhalb der Decke zusätzlichen vorgesehenen Deckenraster montiert. Innerhalb des Zwischenraums sind ein oder mehrere Leuchten angeordnet. An dem in Einbaulage unteren Ende der Längsprofile sind an der Außenseite Deckenplatten oder Deckenprofile der abgehängten Decke befestigt oder aufgelegt.

Um die Leuchten problemlos in dem Zwischenraum montieren zu können ist es erforderlich, die notwendigen objektabhängigen Maßen einzuhalten. Beispielsweise wird ein Maß von 102 mm als Abstand zwischen den beiden Längsprofilen für das Einsetzen von Leuchten benötigt, wobei andere Maße möglich sind. Durch das seitliche Anpressen der Deckenplatten im Rahmen der Montage, aufgrund von Maßungenauigkeiten, aber auch aufgrund nachträglicher Einbauten von Klimageräten, Beamern oder dergleichen kann es vorkommen, dass diese Deckenplatten unerwünschte Querkräfte auf die Seitenleisten ausüben und die Seitenleisten somit aus ihrer Sollposition in den Zwischenraum verschieben oder verbiegen. Dieses Problem tritt insbesondere dann auf, wenn die Seitenleisten lediglich aus einem dünnen Metallblechkörper gefertigt sind, die leicht verbiegen oder knicken.

Ausgehend von diesem Stand der Technik liegt der Erfindung die Aufgabe zugrunde, diese Nachteile zumindest teilweise zu vermeiden und einen gattungsgemäßen Kanal so weiter zu entwickeln, dass eine Maßhaltigkeit der Seitenleisten auch bei Aufbringen von Querkräften sichergestellt ist. Insbesondere soll die 90°-Ausrichtung (lotgerechte - Ausrichtung) der Seitenleisten im Verhältnis zur Deckenebene gewährleistet sein, um das notwendige Einbaumaß des Zwischenraums nicht durch von den Deckenplatten evtl. aufgebrachten Querkräften zu reduzieren.

Diese Aufgabe wird erfindungsgemäß dadurch gelöst, dass die Verbindungsbrücke als Spange ausgebildet ist, die einen Horizontalschenkel mit endseitig quer sich zu diesem erstreckenden Vertikalschenkeln aufweist, und dass die Verbindungsmittel zur auslenkungsfreien Fixierung der Seitenleisten ausgebildet sind. Aufgrund dieser Ausbildung der Spange ist der erfindungsgemäße Kanal in sich formstabil ausgebildet, um eine lotrechte Ausrichtung der Längsprofile auch beim Einwirken von Querkräften auf die Längsprofile zu gewährleisten. Diese Formstabilität wird hauptsächlich durch die erfindungsgemäße Spange erzielt, welche die Längsprofile in Einbaulage klammerartig umgreift oder in diese eingreift.

Der erfindungsgemäße Kanal ist aus Aluminium-Profilen gefertigt und kann sowohl als Einbau- als auch als Anbaukanal ausgebildet sein.

In der Frontansicht weist die Spange im Wesentlichen eine C- oder U-förmige Geometrie mit dem Horizontalschenkel und sich quer zur Ebene des Horizontalschenkels parallel zueinander erstreckenden Vertikalschenkeln auf. Durch verschieden groß ausgebildete Spangen mit unterschiedlich langen Horizontalschenkeln lassen sich verschiedene Distanzmaße des erfindungsgemäßen Kanals einfach realisieren.

Die die Seitenleisten außenseitig umgreifenden oder innenseitig in diese eingreifenden Vertikalschenkel der Spange sind dabei geometrisch und/oder durch Auswahl geeigneter Materialien so ausgebildet, dass diese bereits alleine die gewünschte Formstabilität des gesamten Kanals gewährleisten können. Dieses kann z. B. dadurch erzielt werden, dass die Vertikalschenkel die Längsprofile in ihrer Höhe nahezu vollständig umgreifen oder nahezu vollständig über deren Höhe eingreifen und Querkräfte aufnehmen. Die zwischen den Längsprofilen und den Vertikalschenkeln ausgebildeten Verbindungsmittel können aber auch so ausgebildet sein, dass diese ein Verbiegen der Teile verhindern und so die Formstabilität unterstützen. Dieses kann zum Beispiel durch sich gegenseitig in Einbaulage hintergreifende Rastvorsprünge von entsprechender Höhe erzielt werden.

Die bevorzugte Ausbildungsform der Verbindungsmittel zur auslenkungsfreien Fixierung der Seitenleisten umfasst mindestens zwei in Einbaulage vertikal voneinander beabstandete Auflager, die korrespondierend paarweise zwischen den Längsprofilen und den Vertikalschenkeln der Spange ausgebildet sind. Dabei ist es besonders vorteilhaft, wenn ein erstes Auflager etwa am oberen Ende des Vertikalschenkels zum Eingreifen in einem oberen Bereich des Längsprofils und ein zweites Auflager etwa an dem unteren Ende des Vertikalschenkels zur Verbindung mit einem unteren Bereich des Längsprofils ausgebildet sind.

Zur Erzielung der gewünschten Maßhaltigkeit und zum Erhalt guter Formstabilität hat es sich als vorteilhaft erwiesen, wenn die Verbindungsmittel zumindest ein paar sich gegenseitig in Einbaulage hintergreifende Vorsprünge aufweisen. Dabei ist an jedem Vertikalschenkel ein entsprechender Vorsprung mit einem Hinterschnitt vorgesehen, der einen korrespondierenden Vorsprung an dem Längsprofil in Einbaulage umgreift und in einem hinter dem Vorsprung ausgebildeten Hinterschnitt eingreift.

Besonders vorteilhaft für die maßhaltige Fixierung ist die Ausbildung der Vorsprünge als Zentriereingriffe mit gegeneinander beim Zusammensetzen auflaufenden Auflaufschrägen mit entsprechender Maßgestaltung, um einen festen Sitz zwischen den sich paarweise in Einbaulage hintergreifenden Rastnasen vorzusehen.

Eine besondere hohe Maßhaltigkeit und Stabilität des Kanals wird durch eine als Doppelspange ausgebildete Spange erzielt. Diese Doppelspange besteht aus zwei identisch ausgebildeten Spangen, die über einen Verbindungsabschnitt miteinander verbunden sind, der sich in Einbaulage axial entlang der Längsachse des Kanals erstreckt. Besonders vorteilhaft ist die Ausbildung dieser Doppelspange als einteiliges, gekantetes Blechprofil mit einer in der Seitenansicht im Wesentlichen U-förmigen Geometrie. Somit lässt sich die Spange als Blechstanzteil oder -biegeteil fertigen, das in die entsprechende Geometrie gekantet wird. Der in Einbaulage oberseitige horizontal sich zur Decke erstreckende Verbindungsabschnitt kann dann zur Verbindung mit der Decke oder Rohdecke verwendet werden.

Die erfindungsgemäße Spange kann mit Löchern zur bauseitigen Abhängung des Kanals von der Rohdecke mittels Noniusaufhängung oder Gewindestangenaufhängung ausgebildet sind. In einer alternativen Ausbildungsform kann der Kanal auch über eine Seilabhängung von der Decke abgehängt sein. Die Verbindungsmittel zur Befestigung der Deckenbefestigungsmittel werden vorzugsweise mit dem Verbindungsabschnitt der Doppelspange befestigt.

Montagetechnisch vorteilhaft ist eine lösbare Verbindung der Spange mit den Längsprofilen. Dieses kann beispielsweise durch Spannschrauben erfolgen, die vorzugsweise oberseitig in dem Verbindungsbereich in Gewindelöchern eingeschraubt sind und auf das oberseitige Ende der Längsprofile wirken und die feste Verbindung zwischen den Verbindungsmitteln zwischen den Längsprofilen und der Spange realisieren.

Üblicherweise sind die Längsprofile spiegelsymmetrisch ausgebildet. Es ist jedoch auch denkbar, dass die Längsprofile unterschiedliche Geometrien aufweisen. Vorzugsweise können die Längsprofile geometrisch so ausgebildet sein, dass sie durch ihre Eigengeometrie Querkräften auf den Kanal standhalten. Dieses kann beispielsweise durch ein- oder mehrfach angeformte Versteifungsrippen erfolgen, die sich an den Längsprofilen quer zur Längsrichtung erstrecken. Diese Versteifungsrippen können zudem auf der Außenseite der Längsprofile als Auflager für Deckenplatten und auf der Innenseite zur Kabelführung innerhalb des Kanals eingesetzt werden.

Vorzugsweise sind die Längsprofile als stranggepresste Profile, besonders vorzugsweise als Aluminium-Profile ausgebildet. Zur Realisierung der notwendigen Eigensteifigkeit hat sich dabei eine Wandstärke von 2,2mm als besonders zweckmäßig erwiesen.

Erfindungsgemäß kann ein Leuchtensystem in dem Zwischenraum lösbar angeordnet werden. Ein solches Leuchtensystem umfasst Lampen und optische Systeme, zum Beispiel Rasterleuchten oder diffuse Leuchtenabdeckungen, sowie weitere Aggregate. Vorzugsweise ist das Lampensystem werkzeuglos mit dem Kanal verbindbar und die einzelnen Bestandteile des Leuchtensystems sind auch getrennt montierbar. Das Leuchtensystem kann beispielsweise ein Lichtband oder einzelne Leuchten umfassen. Ein Lichtband ist definiert als mehrere, aneinander angrenzende Leuchten, die in axialer Erstreckungsrichtung durchgängig hintereinander oder mit Abstand zueinander angeordnet sind.

Daneben kann das Leuchtensystem eine Optik umfassen, bestehend aus einem Raster oder diffus lichtdurchlässigem Glas oder Kunststoff.

Montagetechnisch besonders vorteilhaft ist die Befestigung des Leuchtensystems an der Verbindungsbrücke, da somit der Kanal auch von oben offen und zugänglich ist.

Ein Lichtband kann eine Lichtbandtrageschiene umfassen. Diese Lichtbandtrageschiene dient üblicherweise zur Verlegung der Durchgangsverdrahtungen für das Leuchtensystem. Grundsätzlich kann die Verlegung der Durchgangsverdrahtungen und Versorgungsleitungen jedoch auch an jedem Raum in den Zwischenraum des Kanals erfolgen. Daneben können auch weitere Leitungen für andere Aggregate in dem Zwischenraum geführt werden, zum Beispiel Dimm- oder Notstromanschlüsse, Feuermelder, Lautsprecher, Lichtmessfühler, Bewegungssensoren oder dergleichen.

Wenn das Leuchtensystem eine Optik umfasst, kann vorgesehen sein, dass die Optik unabhängig von dem Lichtband oder der Lampe an dem Kanal befestigbar ist, zum Beispiel seitlich an den Versteifungsrippen der Längsprofile.

Daneben kann ein Trageprofil in dem Zwischenraum vorgesehen sein. Auch dieses Trageprofil kann Vorsorgungsleitungen aufnehmen und ist vorzugsweise an den Verbindungsbrücken befestigt.

An diesem Trageprofil kann zudem ein Geräteträger lösbar befestigt werden, zum Beispiel durch Anklipsen. Ein Geräteträger besteht üblicherweise aus einem umgekanteten Stahlblechkörper zur Erzielung der erforderlichen Längssteifigkeit. An einem solchen Geräteträger sind die zum Betrieb der Leuchte erforderlichen Aggregate üblicherweise bereits vormontiert, wie z. B. magnetische oder elektronische Vorschaltgeräte, Starter, Anschlussklemmen, Phasenwähler usw. Der Geräteträger ist vorzugsweise werkzeuglos an dem klammerartigen Trageprofil befestigt, wobei zwischen dem Geräteträger und dem Trageprofil entsprechende Rastmittel in bekannter Weise ausgebildet sind.

Zwischen diesem Geräteträger und dem Trageprofil kann ein Trennstecker angeordnet sein, welcher die lösbare Verbindung zu dem Geräteträger und dem Leuchtensystem realisiert. Dieser Trennstecker kann einen Schiebekontakt zur Zuordnung einzelner Lampenkreise zu Schaltgruppen umfassen.

Vorzugsweise weist der erfindungsgemäße Kanal eine geringe Bauhöhe von nur 125 mm bei einer Zwischenraumgröße von 102 mm auf. Die Bauhöhe kann aber auch geringer sein, wenn der Zwischenraum eine entsprechend geringere Größe aufweist.

Außenseitig an den Längsprofilen können Auflageflansche für Deckenplatten ausgebildet sein. Diese sind vorzugsweise am unteren Ende der Längsprofile einstückig angeformt. Diese Auflageflansche dienen zum Auflegen von Deckenplatten für gesägte Decken, Metall- und Mineralfaserdecken. Daneben können diese Schnittbereiche durch Sichtschienen verdeckbar sein. Das System erlaubt dabei einen Toleranzausgleich von ca. 10mm.

Die Längsprofile des erfindungsgemäßen Kanals können zumindest an den Stirnenden mit Kupplungsmitteln zum gegenseitigen Kuppeln der in Einbaulage einander angrenzenden Stirnenden aufweisen. Vorzugsweise bestehen diese Kupplungsmittel aus Stiften oder Gewindestiften, die in einstückig angeformten Schraubkanälen einsetzbar sind.

Die Erfindung wird nachfolgend anhand von bevorzugten Ausführungsformen beschrieben, wobei auf die beigefügten Zeichnungen Bezug genommen wird. In diesen zeigen:
- Figur 1: eine Frontansicht des erfindungsgemäßen Kanals;

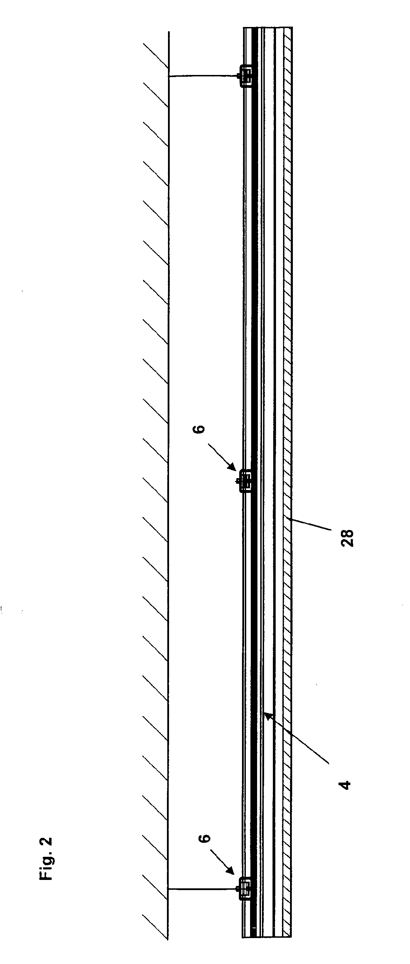

- Figur 2: eine Seitenansicht des Kanals gemäß Figur 1;
- Figur 3: eine perspektivische Ansicht eines verkürzten Abschnitts eines Längsprofils zur Verdeutlichung dessen geometrischer Ausbildung;
- Figur 4: eine Frontansicht eines Längsprofils;
- Figur 5: eine Frontansicht einer erfindungsgemäßen Doppelspange;
- Figur 6: eine Draufsicht der Doppelspange gemäß Figur 5;
- Figur 7: eine perspektivische Ansicht der Doppelspange gemäß Figur 5 von unten;
- Figur 8: eine Seitenansicht entlang des Pfeils XIII gemäß Figur 6;
- Figur 9: eine Frontansicht im Teilschnitt eines alternativ ausgebildeten Kanals zur Verdeutlichung alternativer Verbindungsmittel zwischen den Längsprofilen und der Spange;
- Figur 10: eine perspektivische Ansicht von unten einer alternativ ausgebildeten Spange; und

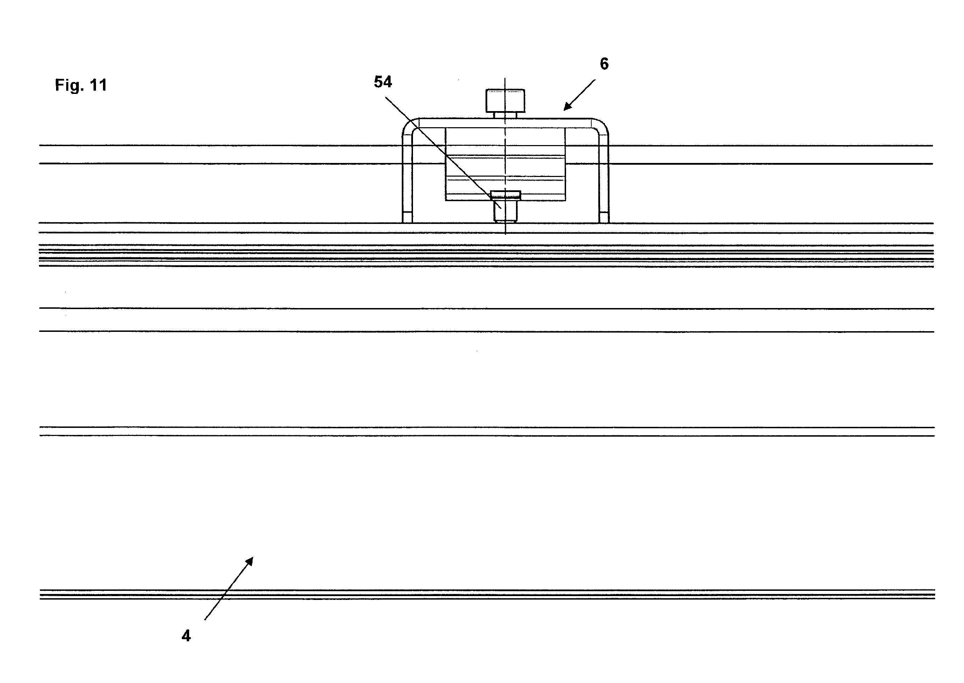

- Figur 11: eine vergrößerte Seitenansicht gemäß Figur 2 im Bereich einer Spange.

Demnach besteht der erfindungsgemäße Kanal für abgehängte Decken zur Aufnahme von Versorgungsleitungen und Leuchten aus zwei sich gegenüber in Längsrichtung erstreckenden und einen Zwischenraum zwischen sich einschließenden Längsprofilen 2,4, die über mehrere, beabstandet zueinander angeordnete Spangen 6 zusammengehalten werden. Der Kanal hat in der vorliegenden Ausführungsform eine Länge von ca. 3 Metern und ist über insgesamt drei Spangen 6 an der Decke montiert. Zwei dieser Spangen 6 sind im Bereich der Stirnenden des Kanals und mit der Decke verbunden. Eine etwa in der Mitte der Längsprofile angeordnete dritte Spange ist nur zur Versteifung und zum Zusammenhalten der Längsprofile 2,4 vorgesehen, nicht aber mit der Decke verbunden. In der vorliegenden Ausführungsform sind die Spangen 6 über eine Seilabhängung 60 an einer nicht näher dargestellten Rohdecke befestigt.

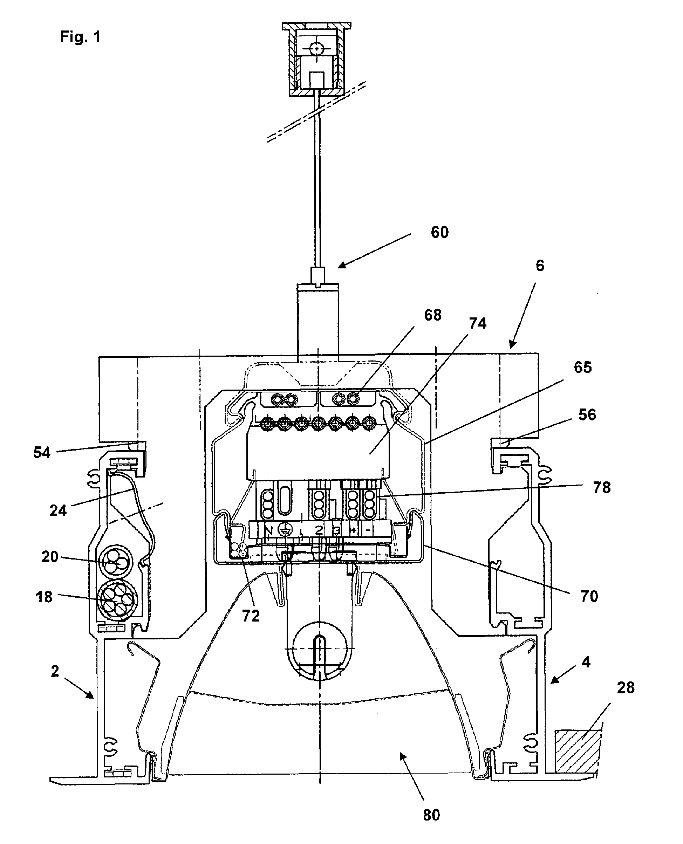

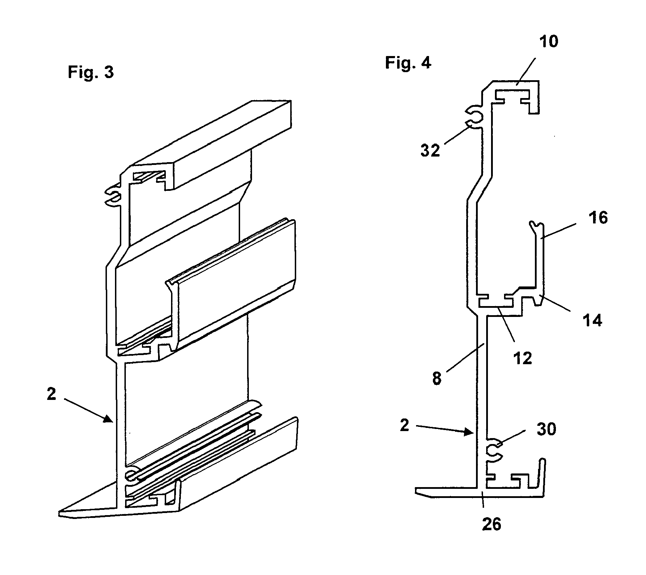

Die Figuren 3 und 4 zeigen den genauen geometrischen Aufbau der Längsprofile 2, 4, wobei zu berücksichtigen ist, dass die Figur 3 nur ein Teilstück eines solchen Längsprofils 2, 4 zu Verdeutlichungszwecken darstellt. Das tatsächliche Längsprofil kann sich über mehrere Meter erstrecken und erweist hierfür für die geometrische Ausbildung auch die notwendige Längssteifigkeit auf. Jedes Längsprofil besteht aus einem Vertikalschenkel 8, welcher sich über die Höhe des Längsprofils 2 erstreckt und im Wesentlichen auch die Höhe des erfindungsgemäßen Kanals definiert. Zur Erhöhung der Längssteifigkeit ist dieser Vertikalschenkel 8 mehrfach gekantet. Am oberen Ende des Vertikalschenkels 8 ist ein quer zu diesem verlaufender Oberschenkel 10 ausgebildet, der eine hakenförmige Geometrie aufweist und eine obere Anpressfläche des Längsprofils 2 definiert. Etwa in der Mitte des Vertikalschenkels 8 ist parallel verlaufend zu dem Oberschenkel 10 ein Mittelschenkel 12 angeformt, der an seinem äußeren Ende einen hakenförmigen Vorsprung 14 aufweist. Dieser Vorsprung 14 hintergreift in Einbaulage einen korrespondierend ausgebildeten Vorsprung an der Spange und bildet somit den einen Teil eines Zentriereingriffs. Oberhalb des Vorsprungs 14 ist eine sich parallel zu dem Vertikalschenkel erstreckende Leiste 16 angeformt. Dieser durch den Vertikalschenkel 8, den Mittelschenkel 12 und die Leiste 16 gebildete Innenkanal dient zur seitlichen Kabelführung von Versorgungsleitungen 18, 20 (s. Figur 1) neben den Leuchten. Zwischen V-Kante am oberen Ende der Leiste 16 und der Unterseite des Oberschenkels ist zum Abdecken der Versorgungsleitungen 18, 20 ein Abdeckungsprofil 24 eingesprengt.

Am unteren Ende des Vertikalschenkels 8 ist ein plattenförmiger und T-förmig zum Vertikalschenkel gestalteter Doppelflansch 26 angeformt. Dieser Doppelflansch 26 erstreckt sich parallel zu dem Mittelschenkel 12 und dem Oberschenkel 10 nach innen und ferner in Einbaulage auch nach außen zur Bildung eines Auflageflansches für die Deckenplatten 28.

Zur Kupplung einzelner Längsprofile an den angrenzenden Stirnenden weisen die Längsprofile 2 am oberen und am unteren Ende durchgängig verlaufende und einstückig angeformte Schraubkanäle 30, 32 auf, die aus jeweils zwei bogenförmig aufeinander zuragenden Schenkeln bestehen. In diese Schraubkanäle 30, 32 sind Verbindungsstifte zum stirnseitigen Kuppeln von Längsprofilen 2, 4 einsetzbar.

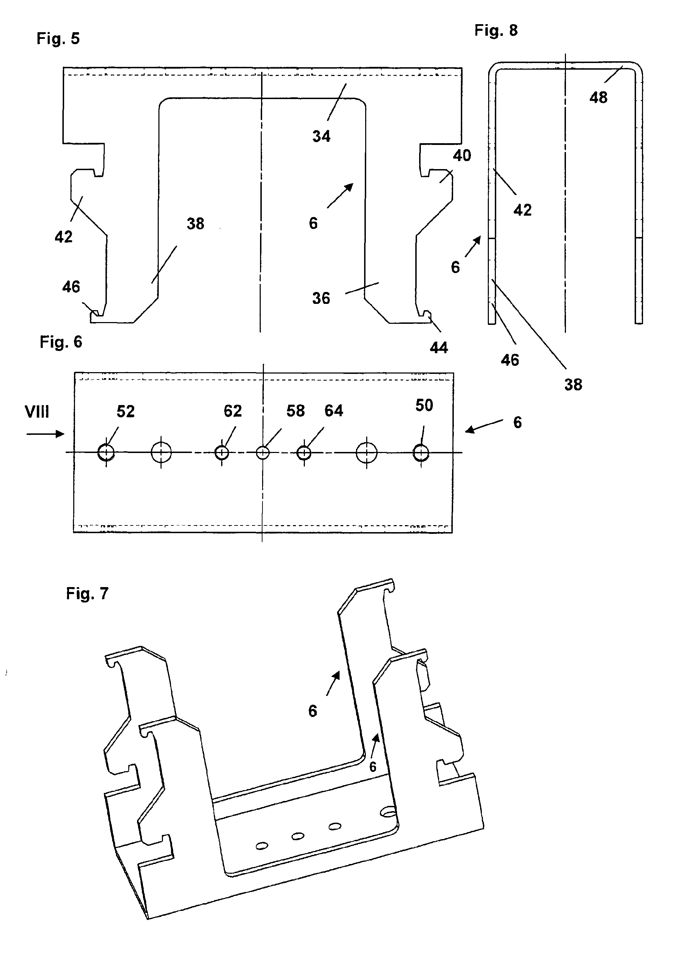

Die Figuren 5 bis 8 zeigen die erfindungsgemäße Spange 6 in verschiedenen Ansichten. Vorliegend ist diese als Doppelspange ausgebildet. Jede Spange weist einen oberen Horizontalschenkel 34 mit endseitig sich quer zu diesem und sich parallel zueinander erstreckenden Vertikalschenkeln 36, 38 auf. Etwa in der Mitte der Vertikalschenkel 36, 38 sind obere Vorsprünge 40, 42 und am unteren Ende untere Vorsprünge 44, 46 ausgebildet. Die oberen Vorsprünge 40, 42 sind geometrisch so ausgestaltet, dass sie als Auflager für die Oberschenkel 10 der Längsprofile 2, 4 fungieren und der nasenartige Vorsprung am Ende des Oberschenkels 10 in Einbaulage formschlüssig und selbstzentrierend in einen entsprechenden Hinterschnitt an den oberen Vorsprüngen 40, 42 eingreift. In gleicher Weise sind die unteren Vorsprünge 44, 46 zur paarweisen Bildung von Zentriereingriffen mit den Vorsprüngen 14 an den Mittelschenkel 12 der Längsprofile 2, 4 ausgebildet. Somit sind an jedem Längsprofil vertikal voneinander beabstandete Verbindungsmittel zwischen den Längsprofilen 2, 4 und der Spange 6 ausgebildet. Durch diese Verbindungsmittel und die entsprechend breite Ausbildung der Vertikalschenkel 36, 38 ist die Verbindung zwischen der Spange 6 und den Seitenleisten 2, 4 formstabil und verhindert, dass die Längsprofile 2, 4 durch auf diese wirkende Querkräfte ausgelenkt oder verbogen werden können. Dieses wird auch durch die Wandstärke der Längsprofile 2, 4 und die an diesen angeformte Schenkel 10, 12, 26 erzielt, die als Versteifungsrippen fungieren.

Die Doppelspange ist als in der Seitenansicht gemäß Figur 8 U-förmig gekantetes Brechprofil ausgebildet, dass einen oberseitigen Verbindungsabschnitt 48 aufweist, der sich zwischen den in Achsrichtung des Kanals zueinander beabstandeten Spangen 6 erstreckt. In diesem horizontalen Verbindungsabschnitt 48 sind mehrere Bohrungen vorgesehen. Die äußeren Bohrungen 50, 52 sind als Gewindebohrungen zur Aufnahme von Fixierungsschrauben 54, 56 ausgebildet, deren untere Enden in Einbaulage auf die Oberseite der Oberschenkel 10 der Längsprofile 2, 4 wirken, um die paarweise zwischen den Längsprofilen 2, 4 und den Spangen 6 ausgebildeten Zentriereingriffe in Einbaulage ineinander zu pressen. An der mittleren Bohrung 58 der Doppelspange ist die Seilabhängung 60 befestigbar.

Beidseitig von dieser mittleren Bohrung 58 sind Befestigungsbohrungen 62, 64 angeordnet. An diesen Befestigungsbohrungen 62, 64 der Spangen 6 ist eine Lichtbandtrageschiene 66 befestigt. In dieser Lichtbandtrageschiene 66 ist oberseitig die Durchgangsverdrahtung 68 angeordnet. Mehrere Leuchteneinsätze 70 sind werkzeuglos an diese Lichtbandtrageschiene 66 angeklipst. Die Platzierung ist entsprechend der Raumanordnung bzw. auf einer Raumwidmungsänderung flexibel.

Die Leuchteneinsätze sind auf einem Geräteträger 72 montiert. Trennstreckenoberteile 74 innerhalb der Durchgangsverdrahtung und komplementäre Trennstreckenunterteile 76 auf dem Geräteträger 72 gewährleisten die selbständige elektrische Kontaktierung beim Einsetzen. Mittels eines Schiebekontaktes 78 des Trennstreckerunterteils 76 kann die Zuordnung der einzelnen Lampenkreise zu den Schaltergruppen erfolgen. Ein Dimm- oder ein Notstromanschluss kann über einen sechsten und siebten Leiter vorgenommen werden.

Die Versorgungsleitungen 18,20 für zusätzliche elektrische Installationen können auch galvanisch getrennt beidseitig in den Längsprofilen 2, 4 verlegt werden.

Das Leuchtensystem ist vorliegend einlampig ausgebildet, kann aber auch zweilampig oder mehrlampig ausgebildet sein. Die Optik des Leuchtensystems umfasst vorliegend ein durchlaufendes 60/65°-Raster 80, das unabhängig von der Leuchte in den Kanal gesetzt und ausgetauscht werden kann.

Ferner können auch diverse weitere Module lösbar in den Kanal eingesetzt werden, wie z. B. nicht dargestellte Brandmelder, Lautsprecher, Blindabdeckungen, Strahlermodule oder dergleichen.

Anstelle der gezeigten Seilabhängung können die Spangen des erfindungsgemäßen Kanals über Noniusaufhänger oder Gewindestangen der Rohdecke befestigt werden.

Die Deckenplatten 28 werden außen auf den Rand des Unterschenkels 26 der Längsprofile 2,4 aufgelegt. Im Falle einer bereits abgehängten Decke kann der erfindungsgemäße Kanal auch nachträglich von unten in eine freigehaltene Öffnung montiert werden. Die nach außen ragenden Flansche der Unterschenkel 26 der Längsprofile 2, 4 kaschieren dabei den Deckenrand.

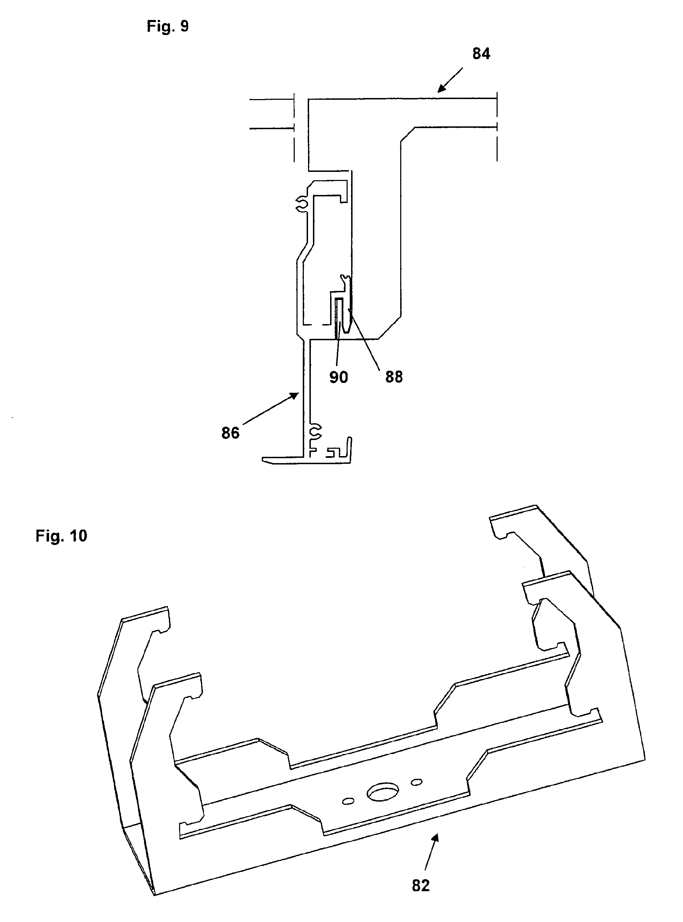

Figur 9 zeigt eine Frontansicht im Teilschnitt einer alternativen Ausführungsform des erfindungsgemäßen Kanals. Bei dieser Ausführungsform sind zwischen der Spange 84 und den Längsprofilen 86 nur ein paar sich gegenseitig in Einbaulage hintergreifende hakenförmig ausgebildete Vorsprünge mit entsprechenden Hinterschnitten ausgebildet. In Einbaulage hintergreift ein Längsprofilvorsprung 88 den Hinterschnitt eines Spangenvorsprungs 90 und umgekehrt. Die hakenförmigen Vorsprünge 88, 90 weisen im Gegensatz zu den vorigen Ausführungsformen eine solche Höhe auf, dass die aufeinander wirkenden Anlageflächen die gewünschte formstabile Verbindung zwischen den Längsprofilen 86 und der Spange 84 mit nur einem Auflager realisieren.

Bei den bislang beschriebenen Ausführungsformen hintergreift die Spange die Längsprofile in Einbaulage formschlüssig. Figur 10 zeigt eine alternative ausgebildete Doppelspange 82, die grundsätzlich ähnlich ausgebildet ist, aber korrespondierend ausgebildete Seitenleisten in Einbaulage umgreift. Beide Ausführungsformen verwirklichen so die gewünschte auslenkungsfreie und formstabile Verbindung zwischen den Seitenleisten und den Doppelspangen.

Die erfindungsgemäßen Kanäle werden vorzugsweise in modularen Einheitslängen gefertigt, welche vor Ort gekuppelt und auch auf das Baumaß gekürzt werden können. Zur Vermeidung von Schallbrücken kann der Kanal im Bereich von Zwischenwänden mit Steinwolle aufgefüllt werden.

Die Erfindung sieht zusammenfassend einen Kanal für abgehängte Decken zur Aufnahme von Versorgungsleitungen und Leuchten vor, das aus zwei, vorzugsweise spiegelsymmetrischen Profilen besteht, welche mittels mehrerer Spangen unterschiedlicher Breite und Höhe zur Bildung eines formstabilen Kanals zusammengehalten werden. Die exakte Ausrichtung der Längsprofile in 90°-Stellung zur Rohdecke wird durch die Kantung und 4- bzw. 8-fache Fixierung der Längsprofile an der formstabilen Spange erzielt. Trageprofile, Leuchteneinsätze, Raster oder Prismenabdeckungen sind werkzeuglos in den Kanal einsprengbar. Das einsetzbare Raster ist beidseitig abklapp- und aushängbar. Die Längsprofile sind so aufgebaut, dass das Raster bzw. eine Prismenoptik separat vom Leuchtenkörper montiert werden kann. Während der Bauphase kann eine Leuchte vorab ohne Optik in Betrieb genommen werden. Bedingt durch den bis auf die Spange nach oben offenen Kanal, kann an jeder Stelle auf diesen zugegriffen werden. Die Längsprofile können bei unterschiedlichen Raumbreiten einfach gekürzt werden. Bei Raumdurchdringungen werden die Schottwände mit Schallsteinwolle hinterfüllt, um den Schalldurchgang zu verhindern oder zumindest zu reduzieren.

### Bezugszeichenliste

- 2: Längsprofil
- 4: Längsprofil
- 6: Stange
- 8: Vertikalschenkel
- 10: Oberschenkel
- 12: Mittelschenkel
- 14: Vorsprung
- 16: Leiste
- 18: Versorgungsleitung
- 20: Versorgungsleitung
- 22: Abdeckung
- 24: Abdeckungsprofil
- 26: Unterschenkel
- 28: Deckenplatte
- 30: Schraubkanal
- 32: Schraubkanal
- 34: Horizontalschenkel
- 36: Vertikalschenkel
- 38: Vertikalschenkel
- 40: Oberer Vorsprung
- 42: Oberer Vorsprung
- 44: Unterer Vorsprung
- 46: Unterer Vorsprung
- 48: Verbindungsabschnitt
- 50: Äußere Bohrung
- 52: Äußere Bohrung
- 54: Fixierungsschraube
- 56: Fixierungsschraube
- 58: Mittlere Bohrung
- 60: Seilabhängung
- 62: Befestigungsbohrung
- 64: Befestigungsbohrung
- 66: Lichtbandtrageschiene
- 68: Durchgangsverdrahtung
- 70: Leuchteneinsatz
- 72: Geräteträger
- 74: Trennsteckeroberteile
- 76: Trennsteckerunterteile
- 78: Schiebekontakte
- 80: Raster
- 82: Doppelspange
- 84: Spange
- 86: Längsprofil
- 88: Längsprofilvorsprung
- 90: Spangenvorsprung

## Patentansprüche

1. Kanal für abgehängte Decken zur Aufnahme von Versorgungsleitungen und Leuchten mit
a) zwei sich gegenüber in einer Längsrichtung erstreckenden und einen Zwischenraum zwischen sich einschließenden Längsprofilen (2, 4),
b) mehreren beabstandet zueinander angeordneten Verbindungsbrücken zur Verbindung der Längsprofile (2, 4), welche sich quer oberhalb der Längsprofile (2, 4) erstrecken und bauseitig befestigbar sind, und
c) zwischen den Längsprofilen (2, 4) und den Verbindungsbrücken wirkenden Verbindungsmitteln,
**dadurch gekennzeichnet**
d) **dass** die Verbindungsbrücke als die Längsprofile (2, 4) in Einbaulage umgreifende oder hintergreifende Spange (6) ausgebildet ist, die einen Horizontalschenkel (34) mit endseitig sich quer zu diesem erstreckenden Vertikalschenkeln (36, 38) aufweist,
e) und **dass** die Verbindungsmittel zur auslenkungsfreien Fixierung der Seitenleisten ausgebildet sind.

2. Kanal nach Anspruch 1, **dadurch gekennzeichnet, dass** jeder Vertikalschenkel (36, 38) mindestens zwei in Einbaulage vertikal voneinander beabstandete Auflager für die Längsprofile (2, 4) aufweist.

3. Kanal nach Anspruch 1 oder 2, **dadurch gekennzeichnet, dass** die Verbindungsmittel zumindest ein paar sich in Einbaulage gegenseitig hintergreifende Vorsprünge (2, 4) aufweisen.

4. Kanal nach Anspruch 3, **dadurch gekennzeichnet, dass** zumindest das in Einbaulage untere Auflager als Zentriereingriff ausgebildet ist.

5. Kanal nach einem der vorhergehenden Ansprüche, **dadurch gekennzeichnet, dass** die Spange (6) als Doppelspange ausgebildet ist.

6. Kanal nach einem der vorhergehenden Ansprüche, **dadurch gekennzeichnet, dass** die Spange (6) Löcher zur bauseitigen Abhängung des Systems von der Rohdecke mittels Noniusaufhängern aufweist.

7. Kanal nach einem der vorhergehenden Ansprüche, **dadurch gekennzeichnet, dass** die Längsprofile (2, 4) lösbar an den Spangen (6) befestigbar sind.

8. Kanal nach einem der vorhergehenden Ansprüche, **dadurch gekennzeichnet, dass** die Längsprofile (2, 4) spiegelsymmetrisch ausgebildet sind.

9. Kanal nach einem der vorhergehenden Ansprüche, **dadurch gekennzeichnet, dass** die Längsprofile (2, 4) Aluminium - Profile aufweisen.

10. Kanal nach einem der vorhergehenden Ansprüche, **dadurch gekennzeichnet , dass** ein Leuchtensystem in dem Zwischenraum lösbar befestigbar ist.

11. Kanal nach Anspruch 10, **dadurch gekennzeichnet, dass** zumindest Teile des Leuchtensystems an der Spange (6) befestigbar sind.

12. Kanal nach Anspruch 10 oder 11, **dadurch gekennzeichnet, dass** das Leuchtensystem ein Lichtband umfasst.

13. Kanal nach Anspruch 12, **dadurch gekennzeichnet, dass** das Lichtband eine Lichtbandtrageschiene (66) umfasst.

14. Kanal nach Anspruch 10 bis 13, **dadurch gekennzeichnet, dass** das Leuchtensystem eine Optik umfasst.

15. Kanal nach Anspruch 14, **dadurch gekennzeichnet, dass** die Optik lösbar befestigbar ist.

16. Kanal nach einem der vorhergehenden Ansprüche, **dadurch gekennzeichnet, dass** ein Trageprofil in dem Zwischenraum vorgesehen ist.

17. Kanal nach Anspruch 16, **dadurch gekennzeichnet, dass** das Tragprofil an den Spangen (6) befestigt ist.

18. Kanal nach einem der Ansprüche 16 oder 17, **dadurch gekennzeichnet, dass** ein Geräteträger (72) unter dem Trageprofil befestigbar ist.

19. Kanal nach Anspruch 18, **dadurch gekennzeichnet, dass** zwischen dem Geräteträger (72) und der Lichtbandtrageschiene (66) ein Trennstecker angeordnet ist.

20. Kanal nach Anspruch 19, **dadurch gekennzeichnet, dass** der Trennstecker einen Schiebekontakt (78) zur Zuordnung einzelner Lampenkreise zu Schaltgruppen umfasst.

21. Kanal nach einem der vorhergehenden Ansprüche, **dadurch gekennzeichnet, dass** neben dem Leuchtensystem weitere Aggregate an diesem befestigbar sind.

22. Kanal nach einem der vorhergehenden Ansprüche, **dadurch gekennzeichnet, dass** dieses eine Einbauhöhe von maximal 110 mm aufweist.

23. Kanal nach einem der vorhergehenden Ansprüche, **dadurch gekennzeichnet, dass** die Längsprofile (2, 4) Auflageflansche für Deckenplatten aufweisen.

24. Kanal nach einem der vorhergehenden Ansprüche, **dadurch gekennzeichnet, dass** die Längsprofile (2, 4) zumindest an ihren Stirnenden Kupplungsmittel zum gegenseitigen Kuppeln aufweisen.
